**Europäisches Patentamt**

**European Patent Office**

**Office européen des brevets**

(19)

(11)  **EP 0 700 946 B1**

(12)  **EUROPÄISCHE PATENTSCHRIFT**

(45) Veröffentlichungstag und Bekanntmachung des Hinweises auf die Patenterteilung:
**14.04.1999  Patentblatt 1999/15**

(51) Int. Cl.$^6$: **C08G 18/10**,  C08K 5/42,
C08K 5/521,  C08K 5/5333,
C08K 5/092,  C08K 5/11

(21) Anmeldenummer: **95113493.1**

(22) Anmeldetag: **28.08.1995**

(54) **Verfahren zur Herstellung von elastischen Formkörpern**

Process for the production of electric mouldings

Procédé de préparation d'articles moulés élastiques

(84) Benannte Vertragsstaaten:
**DE ES FR GB IT NL SE**

(30) Priorität: **08.09.1994 DE 4431963**

(43) Veröffentlichungstag der Anmeldung:
**13.03.1996  Patentblatt 1996/11**

(73) Patentinhaber: **BAYER AG**
**51368 Leverkusen (DE)**

(72) Erfinder:
- **Meiners, Hans-Joachim, Dr.**
  **D-51371 Leverkusen (DE)**
- **Haas, Peter, Dr.**
  **D-42781 Haan (DE)**
- **Mayer, Eduard, Dr.**
  **D-41539 Dormagen (DE)**
- **Dörner, Karl-Heinz**
  **D-50259 Pulheim (DE)**

(56) Entgegenhaltungen:
EP-A- 0 329 388          EP-A- 0 478 216
DE-A- 4 111 386

## Beschreibung

Die Erfindung betrifft ein Verfahren zur Herstellung von elastischen Formkörpern aus Urethangruppen aufweisenden Polyharnstoffelastomeren durch Umsetzung einer anorganische Füllstoffe enthaltenden, gegenüber Isocyanatgruppen reaktionsfähigen A-Komponente mit einer im wesentlichen aus NCO-Semiprepolymeren bestehenden B-Komponente in geschlossenen Formen, wobei die A-Komponente sowohl anorganische Füllstoffe als auch deren Einarbeitung erleichternde Zusatzstoffe mit aciden Gruppen enthält und die Komponenten nach der Reaktionsspritzgußtechnik miteinander vermischt werden.

Die Herstellung von Urethangruppen aufweisenden Polyharnstoffelastomeren durch Umsetzung von mit Hilfe der Reaktionsspritzgußtechnik hergestellten Reaktionsgemischen aus NCO-Semiprepolymeren und Gemischen aus aromatischen Diaminen und höhermolekularen, Amino- und gegebenenfalls Hydroxylgruppen aufweisenden Verbindungen ist beispielsweise aus DE-OS 39 14 718 bekannt. Dieses Verfahrensprinzip gestattet die Herstellung von Elastomeren mit besseren mechanischen Eigenschaften im Vergleich zu Produkten, die nach dem Einstufenverfahren, beispielsweise gemäß DE-AS 2 622 951 hergestellt worden sind. Ein Nachteil der nach dem Semiprepolymerverfahren hergestellten Formkörper liegt in deren größeren Schwindung (Volumenverminderung nach Entformung). Dies führte bei Verwendung von Formwerkzeugen, die für das Einstufenverfahren vorgesehen sind, bei Anwendung des Semiprepolymerverfahrens letztendlich zu Formkörpern eines verringerten Volumens, so daß die Anwendung des Semiprepolymerverfahrens den Bau neuer, diesem Umstand Rechnung tragender Formwerkzeuge voraussetzen würde. Ein weiterer Problempunkt ist die oftmals erwünschte Mitverwendung von anorganischen Füll- und Verstärkungsstoffen der an sich bekannten Art. Diese, beispielsweise Kurzglasfasern, könnten zwar oftmals in der vergleichsweise großvolumigen B-Komponente (NCO-Semiprepolymer) stabil suspendiert werden, jedoch wird von dieser Möglichkeit wegen der diesen Füllstoffen anhaftenden, mit den NCO-Gruppen reagierenden Restfeuchte ungern Gebrauch gemacht. Von anderen Füllstoffen, wie beispielsweise bestimmte Filmbildner oder Haftvermittler enthaltende Glasfasern oder aber Wollastonite ist bekannt, daß sie auf der Isocyanatseite (B-Komponente) überhaupt nicht verarbeitet werden können.

Die vor allem aus aminischen Kettenverlängerungsmitteln bestehende A-Komponente weist andererseits ein schlechtes Haltevermögen für anorganische Füllstoffe auf, so daß die Verarbeitung von derartige Füllstoffe enthaltenden A-Komponenten selbst unter ständigem Rühren kaum möglich ist.

Überraschenderweise wurde jetzt gefunden, daß diese Nachteile durch Mitverwendung bestimmter, nachstehend näher beschriebener acider Zusatzstoffe weitgehend beseitigt werden können.

Gegenstand der Erfindung ist ein Verfahren zur Herstellung von elastischen Formkörpern aus Urethangruppen aufweisenden Polyharnstoffelastomeren durch Umsetzung in geschlossenen Formen eines nach der Reaktionsspritzgußtechnik hergestellten Reaktionsgemisches aus

einer A-Komponente, bestehend aus

A1) aromatischen Diaminen, die zumindest in jeweils einer ortho-Stellung zu den Aminogruppen einen Alkylsubstituenten aufweisen,

A2) einer aliphatischen Reaktivkomponente einer mittleren Hydroxyl- bzw. Aminfunktionalität von 2 bis 6 mit einem mittleren Molekulargewicht von 230 bis 12 000, bestehend aus mindestens einem Hydroxyl- und/oder primäre Aminogruppen aufweisenden Polyether oder Polyester in einer Menge von 5 bis 20 Äquivalent-%, bezogen auf die Gesamtmenge der in den Komponenten A1) und A2) vorliegenden, gegenüber Isocynatgruppen reaktionsfähigen Gruppen,

A3) anorganischen Füllstoffen in einer Menge von 15 bis 60 Gew.-%, bezogen auf das Gesamtgewicht der Komponenten A1) bis A3) und

A4) weiteren Zusatzstoffen

mit

einer B-Komponente, bestehend aus einem Isocyanatgruppen aufweisenden Semiprepolymeren mit einem NCO-Gehalt von 8 bis 20 Gew.-% aus

B1) einer Polyisocyanatkomponente, bestehend aus einem gegebenenfalls durch chemische Modifizierung verflüssigten Polyisocyanat oder Polyisocyanatgemisch der Diphenylmethanreihe und

B2) einer Polyolkomponente mit einem mittleren Molekulargewicht von 1 500 bis 12 000 und einer mittleren Hydroxylfunktionalität von mindestens 2,0, bestehend aus mindestens einem, gegebenenfalls dispergierte organische Füllstoffe enthaltenden Polyether- oder Polyesterpolyol

unter Einhaltung einer Isocyanatkennzahl von 90 bis 120, dadurch gekennzeichnet, daß man als Komponente A4) oder als Teil der Komponente A4) acide Gruppen enthaltende Verbindungen mit einer Säurezahl von 20 bis 400 in einer Menge von 0,1 bis 15,0 Gew.-%, bezogen auf das Gesamtgewicht der Komponenten A1) und A2), verwendet.

Die beim erfindungsgemäßen Verfahren einzusetzende A-Komponente besteht aus den Einzelkomponenten A1) bis A4).

Die Komponente A2) wird hierbei in einer Menge von 5 bis 20, vorzugsweise 5 bis 15 Äquivalent-%, bezogen auf alle in den Komponenten A1) und A2) vorliegenden, gegenüber Isocyanatgruppen reaktionsfähigen Gruppen, eingesetzt. Primäre Aminogruppen gehen hierbei als im Sinne der Isocyanat-Additionsreaktionen monofunktionelle Gruppen in die Berechnung ein.

Die Komponente A3) wird in einer Menge von 15 bis 60 Gew.-%, bezogen auf das Gesamtgewicht der Komponenten A1) bis A3), eingesetzt.

Die Teile der Komponente A4) bildenden Zusatzstoffe mit aciden Gruppen werden in Mengen von 0,1 bis 15,0, vorzugsweise 1,0 bis 10 Gew.-%, bezogen auf das Gesamtgewicht der Komponenten A1) und A2), eingesetzt.

Bei der Komponente A1) handelt es sich um Diamine des Molekulargewichtsbereichs 122 bis 400 mit ausschließlich aromatisch gebundenen primären Aminogruppen, die zumindest in jeweils einer ortho-Stellung zu den Aminogruppen einen Alkylsubstituenten aufweisen, insbesondere um solche, die in ortho-Stellung zu der ersten Aminogruppe mindestens einen Alkylsubstituenten und in ortho-Stellung zur zweiten Aminogruppe zwei Alkylsubstituenten mit jeweils 1 bis 4, vorzugsweise 1 bis 3 Kohlenstoffatomen aufweisen, besonders bevorzugt um solche, die in jeweils mindestens einer ortho-Stellung zu den Aminogruppen einen Ethyl-, n-Propyl- und/oder Isopropylsubstituenten und gegebenenfalls in weiteren ortho-Stellungen zu den Aminogruppen Methylsubstituenten aufweisen. Beispiele für derartige Diamine bzw. bevorzugte Diamine sind 2,4-Diaminomesitylen, 1,3,5-Triethyl-2,4-diaminobenzol, 1,3,5-Triisopropyl-2,4-diaminobenzol, 1-Methyl-3,5-diethyl-2,4-diaminobenzol, dessen technische Gemische mit 1-Methyl-3,5-diethyl-2,6-diaminobenzol oder 3,5,3',5'-Tetraisopropyl-4,4'-diaminodiphenylmethan. Beliebige Gemische derartiger Diamine können ebenfalls als Komponente A1) verwendet werden. Besonders bevorzugt handelt es sich bei der Komponente A1) um 1-Methyl-3,5-diethyl-2,4-diaminobenzol oder um dessen technische Gemische mit 1-Methyl-3,5-diethyl-2,6-diaminobenzol (DETDA).

Die Komponente A2) besteht aus mindestens einem aliphatisch gebundene primäre Aminogruppen und/oder aliphatisch gebundene Hydroxylgruppen aufweisenden Polyether oder Polyester und weist ein mittleres Molekulargewicht von 230 bis 12 000, vorzugsweise 300 bis 8 000 und besonders bevorzugt 400 bis 7000, auf. Sowohl hier als auch vor- und nachstehend beziehen sich alle Angaben bezüglich des Molekulargewichts von gegenüber Isocyanatgruppen reaktionsfähigen Reaktionskomponenten auf das aus der Funktionalität und dem Gehalt an funktionellen Gruppen errechenbare Molekulargewicht.

Als Komponente A2) bzw. Teil der Komponente A2) geeignet sind bespielsweise Polyetherpolyole des Molekulargewichtsbereichs 1 800 bis 12 000, vorzugsweise 3 000 bis 8 000, mit 2 bis 6, vorzugsweise 2 bis 4 und insbesondere 3 Hydroxylgruppen pro Molekül. Derartige Polyetherpolyole werden in an sich bekannter Weise durch Alkoxylierung von geeigneten Startermolekülen oder von Gemischen geeigneter Startermoleküle hergestellt, wobei zur Alkoxylierung insbesondere Propylenoxid und gegebenenfalls zusätzlich Ethylenoxid verwendet werden. Geeignete Startermoleküle sind beispielsweise Wasser, Ethylenglykol, Propylenglykol, Trimethylolpropan, Pentaerythrit, Sorbit oder Rohrzucker oder Gemische derartiger Verbindungen, wobei die Funktionalität der Startermoleküle bzw. die mittlere Funktionalität der Gemische der Startermoleküle den oben gemachten Ausführungen bezüglich der Hydroxylfunktionalität angepaßt werden muß. Besonders bevorzugt sind solche Polyetherpolyole, deren Hydroylgruppen zumindest zu 50 %, vorzugsweise zumindest 70 % aus primären Hydroxylgruppen bestehen. Derartige Polyetherpolyole entstehen durch endständiges Aufpfropfen von Ethylenoxid.

Geeignete Polyesterpolyole sind z.B. die in DE-AS 26 22 951, Kolonne 7, Zeile 54 bis Kolonne 8, Zeile 37 genannten Verbindungen, soweit sie den oben gemachten Ausführungen bezüglich Moleküalargewicht und Hydroxylfunktionalität entsprechen.

Als Komponente A2) bzw. Teil der Komponente A2) geeignete Aminopolyether sind insbesondere solche des Molekülargewichtsbereichs 230 bis 5 000, insbesondere 400 bis 4 000 mit 2 bis 3, vorzugsweise mit 2 primären Aminogruppen pro Molekül. Geeignet sind beispielsweise die durch Aminierung von Polyhydroxypolyethern eines entsprechenden Molekulargewichtsbereichs hergestellten Aminopolyether, deren gegenüber Isocyanatgruppen reaktionsfähigen Gruppen zumindestens 80 Äquivalent-% aus primären Aminogruppen bestehen. Beispielhaft genannt seien die von der Firma Texaco unter der Bezeichnung ®Jeffamine D-230, D-400, D-2000, T-403 oder T-5000 vertriebenen Polyoxypropylendiamine bzw. -triamine.

Als Komponente A2) bzw. Teil der Komponete A2) geeignete Polyhydroxypolyester sind insbesondere solche des Molekülargewichtsbereichs 1 500 bis 12 000, vorzugsweise 3 000 bis 8 000 und insbesondere 2 000 bis 8 000 mit (im Mittel) 2 bis 2,5, vorzugsweise 2 bis 2,2 primären Hydroxylgruppen pro Molekül. Es handelt sich um die aus der Polyurethanchemie bekannten Polyesterpolyole auf Basis von Dicarbonsäuren, wie beispielsweise Adipinsäure, Phthalsäure, Tetrahydrophthalsäure, Hexahydrophthalsäure und mehrwertigen Alkoholen wie beispielsweise Ethylenglykol, 1,4-Butandiol, 1,6-Hexandiol und anteilig Glycerin oder Trimethylolpropan.

Als Komponente A2) bzw. Teil der Komponente A2) geeignete Aminopolyester sind beispielsweise die den so eben genannten Polyesterpolyolen entsprechenden Aminopolyester zu nennen. Diese Aminopolyester können sowohl aromatisch als auch aliphatisch gebundene polymere Aminogruppen aufweisen und können aus den beispielhaft genannten Polyesterpolyolen beispielsweise durch Umsetzung der Polyesterpolyole mit Diisocyanaten und anschließende Hydrolyse der NCO-Prepolymeren erhalten werden.

Bei der Komponente A3) handelt es sich um anorganische Füllstoffe. Der Begriff "Füllstoff" soll auch die an sich bekannten anorganischen Verstärkungsstoffe umfassen. Als Komponente A3) bevorzugt sind faserförmige Füllstoffe, insbesondere Glasfasern mit einem Verhältnis von Länge:Durchmesser (l/d-Verhältnis) von 5:1 bis 20:1, bei einer Länge von 50 bis 500 $\mu$m, Wollastonit-Fasern mit einem l/d-Verhältnis von 2:1 bis 20:1, bei einer Länge von 10 bis 100 $\mu$m, Mineralfasern, wie sie von der holländischen Firma Lapinus Fibres BV, Roermond, Niederlande, angeboten werden, ferner schuppenförmige mineralische Füllstoffe wie beispielsweise Glimmer mit einem Verhältnis von Dicke d zu Durchmesser D von 1:10 bis 1:20. Auch mineralische Hohlkörper der an sich bekannten Art sind als Komponente A3) bzw. Teil der Komponente A3) geeignet.

Erfindungswesentlich ist die Verwendung von aciden Substanzen als Komponente A4) bzw. Teil der Komponente A4). Bei diesen Zusatzstoffen handelt es sich um saure Verbindungen mit Säurezahlen von 20 bis 400, vorzugsweise 40 bis 250 mg KOH/g. Bevorzugt werden diesen Angaben entsprechende Carbonsäuren, sowie diesen Angaben entsprechende organische Säuren des Phosphors oder des Schwefels.

Zu den besonders bevorzugten Carbonsäuren gehören gegebenenfalls Ester-, Amid- und/oder Urethangruppen aufweisende Carbonsäuren des genannten Säurezahlbereichs wie beispielsweise Ölsäure, Linolsäure, Linolensäure, Ricinolsäure, Polyricinolsäureester (Veresterungsprodukte der Ricinolsäure mit sich selbst), freie Carboxylgruppen aufweisende Zitronensäureester oder Adipinsäureester des genannten Säurezahlbereichs oder Umsetzungsprodukte von Carbonsäureanhydriden wie Phthalsäureanhydrid oder Maleinsäureanhydrid mit mehrwertigen gegebenenfalls Ether- und/oder Estergruppen aufweisenden Alkoholen.

Geeignete organische Säuren des Phosphors sind beispielsweise $C_4$-$C_{18}$-Alkanphosphonsäuren, Dialkylphosphate mit 4 bis 10 Kohlenstoffatomen im Alkylrest wie beispielsweise Bis-(2-ethylhexyl)-phosphat.

Geeignete organische Säuren des Schwefels sind beispielsweise $C_4$-$C_{18}$-Alkansulfonsäuren, Schwefelsäuremonoalkylester mit 4 bis 18 Kohlenstoffatomen im Alkylrest oder gegebenenfalls $C_4$-$C_{18}$-Alkyl-substituierte Arylsulfonsäuren mit 6 bis 10 Kohlensstoffatomen im aromatischen Rest.

Neben diesen erfindungswesentlichen aciden Zusatzstoffen enthält die Komponente A4) im allgemeinen weitere, an sich bekannte Hilfs- und Zusatzmittel. Beispielhaft genannt seien Aktivatoren für die Urethan- und Harnstoffreaktion wie tertiäre Amine oder die bekannten Zinn(II)- bzw. Zinn(IV)-Salze höherer Carbonsäuren; Stabilisatoren wie beispielsweise die bekannten Polyetherpolysiloxane oder innere Formtrennmittel wie insbesondere Zinkstearat, welches vorzugsweise in Kombination mit seine Verträglichkeit mit den übrigen Komponenten bewirkenden Aminopolyethern der unter A2) beispielhaft genannten Art zum Einsatz kommt.

Die Polyisocyanatkomponente B) weist einen NCO-Gehalt von 8 bis 20, vorzugsweise 10 bis 18 Gew.-% auf und besteht aus NCO-Semiprepolymeren auf Basis einer Polyisocyanatkomponente B1) und Polyhydroxylverbindungen B2).

Bei den Polyisocyanaten B1) handelt es sich um gegebenenfalls durch chemische Modifizierung verflüssigte Polyisocyanate oder Polyisocyanatgemische der Diphenylmethanreihe. Der Begriff "Polyisocyanat der Diphenylmethanreihe" stellt den Oberbegriff für alle Polyisocyanate dar, wie sie bei der Phosgenierung von Anilin/Formaldehyd-Kondensaten gebildet werden und in den Phosgenierungsprodukten als Einzelkomponenten vorliegen. Der Begriff "Polyisocyanatgemisch der Diphenylmethanreihe" steht für beliebige Gemische von Polyisocyanaten der Diphenylmethanreihe, d.h. beispielsweise für die genannten Phosgenierungsprodukte, für die Gemische, die bei der destillativen Auftrennung derartiger Gemische als Destillat oder Destillationsrückstand anfallen und für beliebige Abmischungen von Polyisocyanaten der Diphenylmethanreihe.

Typische Beispiele für geeignete Polyisocyanate B1) sind 4,4'-Diisocyanatodiphenylmethan, dessen Gemische mit 2,2'- und insbesondere 2,4'-Diisocyanatodiphenylmethan, Gemische dieser Diisocyanatodiphenylmethan-Isomeren mit ihren höheren Homologen, wie sie bei der Phosgenierung von Anilin/Formaldehyd-Kondensaten anfallen, durch partielle Carbodiimidisierung der Isocyanatgruppen der genannten Di- und/oder Polyisocyanate modifizierte Di- und/oder Polyisocyanate oder beliebige Gemische derartiger Polyisocyanate.

Die Polyolkomponente B2) weist ein Molekulargewicht von 1 500 bis 12 000, vorzugsweise 2 000 bis 8 000 und insbesondere 3 000 bis 6 000 bei einer mittleren Hydroxylfunktionalität von 2 bis 6, vorzugsweise von 2 bis 4, insbesondere 3, auf.

Als Komponente B2) geeignet sind insbesondere die dieser Definition entsprechenden Polyether- oder Polyesterpolyole bzw. Gemische derartiger Polyhydroxylverbindungen. In Betracht kommen beispielsweise entsprechende Polyetherpolyole, die gegebenenfalls organische Füllstoffe in dispergierter Form enthalten. Bei diesen dispergierten Füllstoffen handelt es sich beispielsweise um Vinylpolymerisate, wie sie z.B. durch Polymerisation von Acrylnitril und Styrol in den Polyetherpolyolen als Reaktionsmedium entstehen (US-PS 33 83 351, 33 04 273, 35 23 093, 31 10 695, DE-PS 11 52 536) oder um Polyharnstoffe oder Polyhydrazide, wie sie durch eine Polyadditionsreaktion in den Polyetherpolyolen als Reaktionsmedium aus organischen Diisocyanaten und Diaminen bzw. Hydrazin entstehen (DE-PS 12 60 142, DE-OS 24 23 984, 25 19 004, 25 13 815, 25 50 833, 25 50 862, 26 33 293 oder 25 50 796). Grundsätzlich sind als Komponente B2) Polyetherpolyole oder Polyesterpolyole der bereits oben unter A2) genannten Art geeignet, sofern sie den zuletzt genannten Kenndaten entsprechen.

Zur Herstellung der NCO-Semiprepolymeren B) werden vorzugsweise die Komponenten B1) und B2) in solchen Mengenverhältnissen zur Reaktion gebracht (NCO-Überschuß), daß NCO-Semiprepolymere mit dem oben genannten NCO-Gehalt resultieren. Die diesbezügliche Umsetzung erfolgt im allgemeinen innerhalb des Temperaturbereichs von 25 bis 100°C. Bei der Herstellung der NCO-Semiprepolymeren wird vorzugsweise die Gesamtmenge der Polyisocyanatkompontete B1) mit vorzugsweise der Gesamtmenge der zu Herstellung der NCO-Semiprepolymeren vorgesehenen Komponente B2) umgesetzt.

Die Durchführung der erfindungsgemäßen Verfahrens erfolgt nach der bekannten Reaktionsspritzgußtechnik (RSG-Verfahren, "RIM-process"), wie sie beispielsweise in DE-AS 2 622 951 (US 4 218 543) oder DE-OS 39 14 718 beschrieben ist. Die Mengenverhältnisse der Komponenten A) und B) entsprechen hierbei einer NCO-Kennzahl von 90 bis 120. Die Menge des in die Form eingebrachten Reaktionsgemischs wird im übrigen so bemessen, daß die Formkörper eine Dichte von mindestens 0,8, vorzugsweise 1,0 bis 1,4 g/cm$^3$ aufweisen. Die Dichte der resultierenden Formkörper hängt selbstverständlich in starkem Maß von der Art und dem Gewichtanteil der mitverwendeten Füllkörper ab. Im allgemeinen handelt es sich bei den erfindungsgemäßen Formkörpern um mikrozellulare Elastomere, d.h. um keine echten Schaumstoffe mit mit dem bloßen Auge sichtbarer Schaumstruktur. Dies bedeutet, daß gegebenenfalls mitverwendete organische Treibmittel weniger die Funktion eines echten Treibmittels als vielmehr die Funktion eines Fließmittels ausüben.

Die Ausgangstemperatur des in die Form eingebrachten Reaktionsgemischs aus den Komponenten A) und B) liegt im allgemeinen bei 20 bis 80, vorzugsweise 30 bis 70°C. Die Temperatur der Form liegt im allgemeinen bei 30 bis 130, vorzugsweise 40 bis 80°C. Bei dem zum Einsatz gelangenden Formwerkzeugen handelt es sich um solche der an sich bekannten Art, vorzugsweise aus Aluminium oder Stahl oder um metallgespritzte Epoxidwerkzeuge. Zur Verbesserung der Entformungseigenschaften können die Innenwände der verwendeten Form gegebenenfalls mit bekannten äußeren Formtrennmitteln beschichtet werden.

Die in der Form entstehenden Formkörper können im allgemeinen nach einer Formstandzeit von 5 bis 180 Sekunden entformt werden. Gegebenenfalls schließt sich an der Entformung ein Tempern bei einer Temperatur von ca. 60 bis 180°C während eines Zeitraums von 30 bis 120 Minuten an.

Die nach dem erfindungsgemäßen Verfahren erhältlichen Formkörper eignen sich insbesondere zur Herstellung von flexiblen Automobilstoßstangen bzw. von flexiblen Karosserieelementen, die in den meisten Fällen nach ihrer Herstellung lackiert werden.

**Beispiele**

**Ausgangsmaterialien**

**Semiprepolymer 1**

80 Gew.-Teile 4,4'-Diisocyanatodiphenylmethan werden bei 80°C mit 100 Gew.-Teilen eines Polyetherpolyols des Molekülargewichts 3 800, hergestellt durch Propoxylierung von Trimethylolpropan und anschließender Ethoxylierung des Propoxylierungsprodukts (PO:EO-Gewichtsverhältnis = 87:13) zu einem NCO-Semiprepolymeren mit einem NCO-Gehalt von 13,8 Gew.-% umgesetzt.

**Polyol 1 (A2)**

Polyetherpolyol des Molekülargewichts 4 800, hergestellt durch Propoxylierung von Trimethylolpropan und anschließender Ethoxylierung des Propoxylierungsprodukts (PO:EO-Gewichtsverhältnis = 85:15).

**Aminopolyether 1 (A2)**

Handelsüblicher Diaminopolyether des Molekulargewichts 400, hergestellt durch Aminierung eines entsprechenden Polypropylenglykols ($^®$Jeffamine D 400 der Firma Texaco)

**Durchführung**

Die Verarbeitung der in den folgenden Beispielen beschriebenen Rezepturen erfolgt mit Hilfe von Reaktionsspritzgußtechnik. Die A-Komponente und die B-Komponente werden einem Hochdruckdosieraggregat zugeführt und nach intensiver Vermischung in einem zwangsgesteuerten Mischkopf in ein temperierbares heißes Metallwerkzeug gedrückt, wobei die Forminnenwand mit einem handelsüblichen Formtrennmittel auf Seifenbasis (RTWC 2006 der Firma Chem Trend) beschichtet war.

Das Plattenwerkzeug aus Stahl erlaubte die Herstellung von Prüfplatten der Abmessungen 300 x 300 x 3 mm. Das Füllen erfolgte von der Längsseite über einen Staubalkenanguß.

Die Werkzeugtemperatur betrug 80°C, die Rohstofftemperatur 45°C.

Die mechanischen Werte werden nach Tempern von 45 min bei 120°C gemessen.

## Beispiel 1

### A-Komponente

| | |
|---|---|
| 62,7 g | einer Mischung aus 65 Gew.-% 1-Methyl-3,5-diethyl-2,4-diaminobenzol und 35 Gew.-% 1-Methyl-3,5-diethyl-2,6-diamino (= DETDA) (A1) |
| 21,2 g | Polyol 1 (A2) |
| 10,6 g | Aminopolyether (A2) |
| 5,3 g | Zinkstearat (A4) |
| 0,1 g | Stabilisator B 8404 der Fa. Goldschmidt, Essen (A4) |
| 90,0 g | Glasfaser MF 7980 der Bayer AG (mittlere Länge l = 190 $\mu$m, l/d = 14:1 ) (A3) |
| 3,0 g | Ricinolsäure (A4) |

Die A-Komponente zeigt eine Lagerstabilität von mehr als 24 Stunden.

### B-Komponente

190 g    Semiprepolymer 1

Eigenschaften des Formkörpers:

| | |
|---|---|
| Shore D (DIN 53505) | 67 |
| Reißfestigkeit (MPa) (DIN 53 504) | 36 |
| Bruchdehnung (%) (DIN 53 504) | 170 |
| Schwindung X-Achse (%) | 0,55 |

## Beispiel 2

### A-Komponente

| | |
|---|---|
| 62,7 g | DETDA (A1) |
| 21,3 g | Polyol 1 (A2) |
| 10,6 g | Aminopolyether 1 (A2) |
| 5,3 g | Zinkstearat (A4) |
| 0,1 g | Stabilisator B 8404 der Fa. Goldschmidt, Essen (A4) |
| 90,0 g | Glasfaser MF 7980 der Bayer AG (A3) |
| 3,0 g | Ölsäure (A4) |

Die A-Komponente zeigt eine Lagerstabilität von mehr als 24 Stunden.

### B-Komponente

190 g    Semiprepolymer 1

Eigenschaften des Formkörpers:

| | |
|---|---|
| Shore D | 68 |
| Reißfestigkeit (MPa) | 36 |
| Bruchdehnung (%) | 155 |
| Schwindung X-Achse (%) | 0,58 |

## Beispiel 3

### A-Komponente

| | |
|---|---|
| 62,7 g | DETDA (A1) |
| 21,3 g | Polyol 1 (A2) |
| 10,6 g | Aminopolyether 1 (A3) |
| 5,3 g | Zinkstearat (A4) |
| 0,1 g | Stabilisator B 8404 der Fa. Goldschmidt, Essen (A4) |
| 90,0 g | Glasfaser MF 7980 der Bayer AG (A3) |
| 5,0 g | Polyricinolsäure der SZ 60 (A4) |

Die A-Komponente zeigt eine Lagerstabilität von mehreren Stunden.

### B-Komponente

190 g    Semiprepolymer 1

Eigenschaften des Formkörpers:

| | |
|---|---|
| Shore D | 68 |
| Reißfestigkeit (MPa) | 36 |
| Bruchdehnung (%) | 165 |
| Schwindung X-Achse (%) | 0,56 |

## Beispiel 4

### A-Komponente

| | |
|---|---|
| 62,7g | DETDA (A1) |
| 21,3 g | Polyol 1 (A2) |
| 10,6 g | Aminopolyol 1 (A2) |
| 5,3 g | Zinkstearat (A4) |
| 0,1 g | Stabilisator B 8404 der Fa. Goldschmidt, Essen (A4) |
| 90,0 g | Glasfaser MF 7980 der Bayer AG (A3) |
| 5,0 g | eines Umsetzungsproduktes aus einem Polypropylenglykol der OH-Zahl 112 und Maleinsäureanhydrid mit einer Säurezahl von 94 (A4) |

Die A-Komponente ist mehr als 24 Stunden lagerstabil.

### B-Komponente

190 g       Semiprepolymer 1

Eigenschaften des Formkörpers:

| | |
|---|---|
| Shore D | 68 |
| Reißfestigkeit (MPa) | 36 |
| Bruchdehnung (%) | 155 |
| Schwindung X-Achse (%) | 0,53 |

## Beispiel 5

### A-Komponente

| | |
|---|---|
| 62,7 g | DETDA (A1) |
| 21,3 g | Polyol 1 (A2) |
| 10,6 g | Aminopolyether 1 (A2) |
| 5,3 g | Zinkstearat (A4) |
| 0,1 g | Stabilisator B 8404 der Fa. Goldschmidt, Essen (A4) |
| 90,0 g | Glasfaser MF 7980 der Bayer AG (A3) |
| 2,5 g | Bis-(2-ethylhexyl)-phosphat (A4) |

Die A-Komponente zeigt eine Lagerstabilität von mehr als 24 Stunden.

### B-Komponente

190 g       Semiprepolymer 1

Eigenschaften des Formkörpers:

| | |
|---|---|
| Shore D | 67 |
| Reißfestigkeit (MPa) | 37 |
| Bruchdehnung (%) | 160 |
| Schwindung X-Achse (%) | 0,54 |

## Beispiel 6

### A-Komponente

| | |
|---|---|
| 62,7 g | DETDA (A1) |
| 21,3 g | Polyol 1 (A2) |
| 10,6 g | Aminopolyether 1 (A2) |
| 5,3 g | Zinkstearat |
| 0,1 g | Stabilisator B 8404 der Fa. Goldschmidt, Essen (A4) |
| 90,0 g | Glasfaser MF 7980 der Bayer AG (A3) |
| 3,0 g | Benzolsulfonsäure (A4) |

Die A-Komponente zeigt eine Lagerstabilität von mehr als 24 Stunden.

### B-Komponente

190 g       Semiprepolymer 1

Eigenschaften des Formkörpers:

| | |
|---|---|
| Shore D | 67 |
| Reißfestigkeit (MPa) | 37 |
| Bruchdehnung (%) | 165 |
| Schwindung X-Achse (%) | 0,57 |

## Beispiel 7 (Vergleich)

**A-Komponente**

| | |
|---|---|
| 62,7 g | DETDA (A1) |
| 21,3 g | Polyol 1 (A2) |
| 10,6 g | Aminopolyether 1 (A2) |
| 5,3 g | Zinkstearat |
| 0,1 g | Stabilisator B 8404 der Fa. Goldschmidt, Essen (A4) |
| 90,0 g | Glasfaser MF 7980 der Bayer AG (A3) |

Die A-Komponente zeigt eine Lagerstabilität von nur ca. 4 Stunden.

**B-Komponente**

190 g      Semiprepolymer 1

Eigenschaften des Formkörpers:

| | |
|---|---|
| Shore D | 68 |
| Reißfestigkeit (MPa) | 35 |
| Bruchdehnung (%) | 160 |
| Schwindung X-Achse (%) | 0,88 |

Die erfindungsgemäßen Beispiele 1 bis 6 zeigen den überraschenden Effekt einer verminderten Schwindung. Diese liegt in einem Bereich der bislang nur für nicht nach dem Semiprepolymerverfahren hergestellten PUR-Elastomere üblich war.

Die Schwindung von Formkörpern, die nach dem Einstufenverfahren hergestellt werden, liegt bei 0,5 bis 0,6 %. Diese "natürliche" Schwindung wird bei der Konstruktion der Formwerkzeuge bereits berücksichtigt. Ein nach dem Semiprepolymerverfahren hergestelltes Formteil gemäß Stand der Technik (Beispiel 7) weist jedoch eine Schwindung von 0,88 % auf. Bezogen auf die Länge eines Automobil-Schwellers von 100 cm bedeutet dies, eine zusätzliche Schwindung von ca.3 mm, die außerhalb der Spezifikationsgrenzen des Automobilherstellers liegt, der maximal eine zusätzliche Schwindung von 1 mm tolerieren kann. Erst aufgrund der erfindungswesentlichen Zusätze A4) wird eine gleiche Schwindung wie beim Einstufenverfahren erreicht, so daß auch das Prepolymerverfahren zur Herstellung von Automobil-Formteilen unter Weiterbenutzung der bislang eingesetzten Formwerkzeuge zur Anwendung gelangen kann. Zudem wird durch den erfindungswesentlichen Zusatz der aciden Komponente A4) die Lagerstabilität der A-Komponente merklich erhöht.

Die Beeinflußung der Sedimentationsstabilität wird durch nachstehende Tabelle erläutert, wobei die aufgeführten Komponenten durch Rühren während 60 Sekunden homogenisiert und anschließend in ein Becherglas mit einem Durchmesser von 5 cm gefüllt wurden. Anschließend wurde das Absetzverhalten beurteilt. Bestimmt wurde die Höhe der füllstoffreien Phase in mm nach Lagerung während des in der Tabelle angegebenen Zeitraums. Die für diesen Test zur Anwendung gelangte A-Komponente bestand aus 75 Gew.-Teilen DETDA, 25 Gew.-Teilen Polyol 1, 100 Gew.-Teilen Glasfaser MF 7980 der Bayer AG und 5,0 Gew.-Teilen der Zusätze A4) entsprechend Beispielen 3 bis 7.

Tabelle

| | Absetzverhalten der Füllstoffmischung nach | | |
|---|---|---|---|
| Zusatz A4 gemäß | 6 h | 12 h | 24 h |
| Beispiel 3 | ohne | ohne | ohne |
| Beispiel 4 | ohne | ohne | ohne |
| Beispiel 5 | ohne | ohne | ohne |
| Beispiel 6 | ohne | ohne | ohne |
| ohne Zusatz A4 | 3 mm | 5 mm | 10 mm |

Bei gleichteiligem Einsatz von Wollastonit als Füllstoff A3) werden ähnliche Unterschiede des Sedimentationsverhaltens beobachtet.

**Patentansprüche**

1. Verfahren zur Herstellung von elastischen Formkörpern aus Urethangruppen aufweisenden Polyharnstoffelastomeren durch Umsetzung in geschlossenen Formen eines nach der Reaktionsspritzgußtechnik hergestellten Reaktionsgemisches aus
einer A-Komponente, bestehend aus

     A1) aromatischen Diaminen, die zumindest in jeweils einer ortho-Stellung zu den Aminogruppen einen Alkylsubstituenten aufweisen,

     A2) einer aliphatischen Reaktivkomponente einer mittleren Hydroxyl-bzw. Aminfunktionalität von 2 bis 6 mit einem mittleren Molekulargewicht von 230 bis 12 000, bestehend aus mindestens einem Hydroxyl- und/oder primäre Aminogruppen aufweisenden Polyether oder Polyester in einer Menge von 5 bis 20 Äquivalent-%, bezogen auf die Gesamtmenge der in den Komponenten A1) und A2) vorliegenden, gegenüber Isocynatgruppen reaktionsfähigen Gruppen,

A3) anorganischen Füllstoffen in einer Menge von 15 bis 60 Gew.-%, bezogen auf das Gesamtgewicht der Komponenten A1) bis A3) und

A4) weiteren Zusatzstoffen

mit
einer B-Komponente, bestehend aus einem Isocyanatgruppen aufweisenden Semiprepolymeren mit einem NCO-Gehalt von 8 bis 20 Gew.-% aus

B1) einer Polyisocyanatkomponente, bestehend aus einem gegebenenfalls durch chemische Modifizierung verflüssigten Polyisocyanat oder Polyisocyanatgemisch der Diphenylmethanreihe und

B2) einer Polyolkomponente mit einem mittleren Molekulargewicht von 1 500 bis 12 000 und einer mittleren Hydroxylfunktionalität von mindestens 2,0, bestehend aus mindestens einem, gegebenenfalls dispergierte organische Füllstoffe enthaltenden Polyether- oder Polyesterpolyol

unter Einhaltung einer Isocyanatkennzahl von 90 bis 120, dadurch gekennzeichnet, daß man als Komponente A4) oder als Teil der Komponente A4) acide Gruppen enthaltende Verbindungen mit einer Säurezahl von 20 bis 400 in einer Menge von 0,1 bis 15,0 Gew.-%, bezogen auf das Gesamtgewicht der Komponenten A1) und A2), verwendet.

2. Verfahren gemäß Anspruch 1, dadurch gekennzeichnet, daß man als acide Gruppen aufweisende Zusatzstoffe Säuren, ausgewählt aus der Gruppe bestehend aus (i) gegebenenfalls Hydroxyl- und/oder Estergruppen aufweisende Carbonsäuren (ii) organischen Säuren des Phosphors und (iii) organischen Säuren des Schwefels, verwendet.

**Claims**

1. A process for the production of resilient mouldings of polyurea elastomers comprising urethane groups by reacting in closed moulds a reaction mixture produced by the reaction injection moulding method and consisting of
an A component, consisting of

A1) aromatic diamines, which each comprise an alkyl substituent in at least one ortho-position relative to the amino groups,

A2) an aliphatic reactive component of an average hydroxyl or amine functionality of from 2 to 6 with an average molecular weight of from 230 to 12,000, consisting of at least one polyether or polyester, comprising hydroxyl and/or primary amino groups, in an amount of from 5 to 20 equiv.% based on the total amount of the groups present in components A1) and A2) and reactive with respect to isocyanate groups,

A3) inorganic fillers in an amount of from 15 to 60 wt.% based on the total weight of components A1) to A3) and

A4) other additives

with
a B component consisting of a semi-prepolymer, comprising isocyanate groups, with an NCO content of from 8 to 20 wt.% of

B1) a polyisocyanate component consisting of a polyisocyanate or polyisocyanate mixture of the diphenylmethane series optionally liquefied by chemical modification, and

B2) a polyol component with an average molecular weight of from 1,500 to 12,000 and an average hydroxyl functionality of at least 2.0, consisting of at least one polyether or polyester polyol optionally containing dispersed organic fillers

while maintaining an isocyanate index of from 90 to 120, characterised in that compounds are used as component A4) or part of component A4) which contain acid groups and exhibit an acid value of from 20 to 400, said compounds being used in an amount of from 0.1 to 15.0 wt.% based on the total weight of components A1) and A2).

2. A process according to claim 1, characterised in that acids are used as the additives comprising acid groups which are selected from the group comprising (i) carboxylic acids optionally comprising hydroxyl and/or ester groups, (ii) organic acids of phosphor and (iii) organic acids of sulfur.

**Revendications**

1. Procédé pour la fabrication de corps moulés élastiques en élastomères de polyurées contenant des groupes uréthanes par réaction dans des moules fermés d'un mélange de réaction, préparé par la technique de moulage réactif par injection, de un composant A consistant en

A1) des diamines aromatiques portant au moins un substituant alkyle dans une position ortho de chacun des groupes amino,

A2) un composant réactif aliphatique ayant une fonctionnalité moyenne en groupes hydroxy ou amino de 2 à 6 avec un poids moléculaire moyen de 230 à 12 000, qui consiste en au moins un polyéther ou polyester à groupes hydroxy et/ou amino primaires, en quantité de 5 à 20 équivalents%, par rapport à la quantité totale des groupes réactifs avec les groupes isocyanates présents dans les composants A1) et A2),

A3) des matières de charge minérale en quantité de 15 à 60 % du poids total des composants A1) à A3) et

A4) d'autres additifs,

avec
un composant B consistant en un semi-prépolymère à groupes isocyanates, à une teneur en NCO de 8 à 20 % en poids, à base de

B1) un composant polyisocyanate consistant en un polyisocyanate ou mélange de polyisocyanates de la série du diphénylméthane éventuellement liquéfié par modification chimique et
B2) un composant polyol ayant un poids moléculaire moyen de 1 500 à 12 000 et une fonctionnalité moyenne en groupes hydroxy d'au moins 2,0, consistant en au moins un polyéther- ou polyester-polyol contenant le cas échéant des matières de charge organiques en dispersion,

en maintenant un indice d'isocyanate de 90 à 120, caractérisé en ce que l'on utilise en tant que composant A4) ou en partie du composant A4) des composés à groupes acides ayant un indice d'acide de 20 à 400 en quantité de 0,1 à 15,0 % du poids total des composants A1) et A2).

2. Procédé selon revendication 1, caractérisé en ce que les additifs à groupes acides sont des acides choisis dans le groupe consistant en (i) les acides carboxyliques contenant le cas échéant des groupes hydroxy et/ou esters, (ii) des acides organiques du phosphore et (iii) des acides organiques du soufre.